# EUROPÄISCHE PATENTSCHRIFT

(11) **EP 2 134 942 B1**
(45) Veröffentlichungstag und Bekanntmachung des Hinweises auf die Patenterteilung: **18.08.2010**
(21) Anmeldenummer: 08736217.4
(22) Anmeldetag: 15.04.2008
(51) Int. Cl.: F02B 29/08, F01L 3/06, F02B 31/08

(54) **BRENNKRAFTMASCHINE**
INTERNAL COMBUSTION ENGINE
MOTEUR À COMBUSTION INTERNE

(30) Priorität: 19.04.2007 DE 102007018917
(43) Veröffentlichungstag der Anmeldung: 23.12.2009
(73) Patentinhaber: MAHLE International GmbH, 70376 Stuttgart (DE); Dr. Ing. h.c. F. Porsche AG, 70435 Stuttgart (DE)
(72) Erfinder: ELSÄSSER, Alfred, 75210 Keltern (DE); RÜCKAUF, Jörg, 71701 Schwieberdingen (DE); SCHWARZENTHAL, Dietmar, 71254 Ditzingen (DE); TRAN, Van-Khanh, 71287 Weissach (DE)
(74) Vertreter: BRP Renaud & Partner
(86) Internationale Anmeldenummer: PCT/EP2008/054522
(87) Internationale Veröffentlichungsnummer: WO 2008/128922

(56) Entgegenhaltungen:
- EP-A- 0 764 770
- DE-A1- 10 032 669
- US-A- 4 354 463
- US-A- 4 974 566
- US-A- 5 950 582

## Beschreibung

Die vorliegende Erfindung betrifft eine Brennkraftmaschine, insbesondere in einem Kraftfahrzeug, mit den Merkmalen des Oberbegriffs des Anspruchs 1. Die Erfindung betrifft außerdem ein zugehöriges Betriebsverfahren.

Aus der US 4,974,566 ist eine Brennkraftmaschine bekannt, die wenigstens einen Zylinder aufweist, der einen Brennraum begrenzt und in dem ein Kolben hubverstellbar ist. Jeder Zylinder weist eine Einlassöffnung für Frischgas auf, der ein Einlassventil zugeordnet ist, das zum Steuern der Einlassöffnung mit einem zugehörigen Ventilsitz zusammenwirkt. Bei der Einlassöffnung ist eine Leitmaskierung ausgebildet, die den Ventilsitz in einer dem Brennraum zugewandten Seite entlang eines begrenzten Umfangsabschnitts seitlich einfasst. Ferner ist die Einlassöffnung einem Einlasskanal zur Zuführung von Frischgas zugeordnet.

Mit Hilfe einer derartigen Leitmaskierung kann bei kleinen Ventilhüben, bei denen das Einlassventil nicht über die Leitmaskierung hinaus vom Ventilsitz abhebt, eine gerichtete Frischgaseinströmung in den Brennraum generiert werden. Bei solchen kleinen Ventilhüben kann das Einlassventil entlang seines Umfangs aufgrund der Leitmaskierung nicht vollständig umströmt werden, sondern nur in dem von der Leitmaskierung frei gelassenen Bereich. Bei größeren Ventilhüben, bei denen sich das Einlassventil über die Leitmaskierung hinaus vom Ventilsitz entfernt, ist das Einlassventil allseits umströmbar, wodurch insbesondere ein reduzierter Einströmwiderstand vorliegt.

Die bekannte Brennkraftmaschine umfasst außerdem einen variablen Ventiltrieb, der es lastabhängig ermöglicht, die Einlassventile mit unterschiedlichen Maximalhüben zu betreiben. Bei kleiner Last ist der Maximalhub der Einlassventile auf die Höhe der Leitmaskierung begrenzt, wodurch bei kleiner Last eine verbesserte Gemischbildung erzielbar ist. Bei großer Last realisiert der Ventiltrieb einen entsprechend größeren Maximalhub, der über die Höhe der Leitmaskierung hinausgeht. Variable Ventiltriebe, mit denen der Maximalhub von Einlassventilen veränderbar ist, sind nur sehr aufwändig realisierbar.

Eine Brennkraftmaschine der eingangs genannten Art ist aus der US 5,950,582 bekannt. Sie umfasst mehrere Zylinder, die jeweils einen Brennraum begrenzen und in den jeweils ein Kolben hubverstellbar ist. Jeder Zylinder weist zumindest eine Einlassöffnung für Frischgas auf, der ein Einlassventil zugeordnet ist, das zum Steuern der Einlassöffnung mit einem zugehörigen Ventilsitz zusammenwirkt. Zumindest einer solchen Einlassöffnung ist eine Leitmaskierung zugeordnet, die den jeweiligen Ventilsitz an einer den jeweiligen Brennraum zugewandten Seite entlang eines begrenzten Umfangsabschnitts seitlich einfasst. Ferner ist jeder Einlassöffnung ein Einlasskanal zugeordnet, wobei zumindest einem solchen Einlasskanal ein Zusatzventil zum Steuern des Einlasskanals zugeordnet ist. Des Weiteren betätigt eine Ventilsteuerung das jeweilige Zusatzventil so, dass das Zusatzventil bei vorbestimmten Betriebszuständen der Brennkraftmaschine den jeweiligen Einlasskanal in Abhängigkeit des Hubs des der jeweiligen maskierten Einlassöffnung zugeordneten Einlassventils öffnet bzw. sperrt.

Die vorliegende Erfindung beschäftigt sich mit dem Problem, für eine Brennkraftmaschine der eingangs genannten Art bzw. für ein zugehöriges Betriebsverfahren eine verbesserte Ausführungsform anzugeben, die sich insbesondere durch eine vergleichsweise preiswerte Realisierbarkeit auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, Einlasskanälen, die zu maskierten Einlassöffnungen führen, Zusatzventile zuzuordnen, mit denen der jeweilige Einlasskanal geöffnet und gesperrt werden kann. Durch Sperren des Einlasskanals kann die Einleitung von Frischgas in den Brennraum verhindert werden, auch wenn das zugehörige Einlassventil geöffnet ist. Mit Hilfe derartige Zusatzventile kann die Frischgasbefüllung der Brennräume hinsichtlich Einlasszeitdauer und Einlasszeitpunkt variiert werden, ohne dass hierzu ein variabler Ventiltrieb erforderlich ist. Derartige Zusatzventile lassen sich insbesondere preiswerter realisieren als ein variabler Ventiltrieb mit einstellbarem Maximalhub für die Einlassventile.

Die so geschaffene Brennkraftmaschine lässt sich bevorzugt so betreiben, dass bei einem Schaltbetriebszustand der Brennkraftmaschine, der sich dadurch charakterisiert, dass die Last der Brennkraftmaschine kleiner als eine vorbestimmte Grenzlast ist und/oder dass die Drehzahl der Brennkraftmaschine kleiner als eine vorbestimmte Grenzdrehzahl ist, das jeweilige Zusatzventil den jeweiligen Einlasskanal sperrt, solange der Hub des der jeweiligen maskierten Einlassöffnung zugeordneten Einlassventils größer ist als ein vorbestimmter Schalthub. Der genannte Schaltbetriebszustand umfasst bevorzugt kleine und mittlere Lasten sowie kleine und mittlere Drehzahlen. Der Schalthub kann zweckmäßig durch die Höhe der Leitmaskierung definiert werden. Unterhalb des Schalthubs kann dann die Leitmaskierung die umfangsmäßig begrenzte Umströmung des Einlassventils bewirken. Bei darüber hinausgehenden Ventilhüben wird dann das Einlassventil in Umfangsrichtung vollständig umströmt. Das bedeutet insbesondere, dass die Leitmaskierung bis zum Schalthub aktiv ist und bei darüber hinaus gehenden Hüben des Einlassventils quasi deaktiviert ist. Bei einer derartiger Ansteuerung des jeweiligen Zusatzventils wird die Befüllung des Brennraums mit Frischgas auf ein frühes Einlasszeitfenster zu Beginn der Öffnungsbewegung des Einlassventils bzw. auf ein spätes Einlasszeitfenster bis zum Ende der Schließbewegung des Einlassventils begrenzt. Im jeweiligen Zeitfenster kann die orientierte Einströmung in den Brennraum aufgrund der dann aktiven Leitmaskierung realisiert und zur Verbesserung des Betriebsverhaltens genutzt werden.

Bei einer vorteilhaften Weiterbildung lassen sich nun innerhalb des Schaltbetriebszustands mit Hilfe einer Schaltlast, die kleiner ist als die Grenzlast, und/oder mit Hilfe einer Schaltdrehzahl, die kleiner ist als die Grenzdrehzahl, zwei unterschiedliche Teilbereiche realisieren. Dem "unteren" Teilbereich, bei dem die Last kleiner als die Schaltlast ist und/oder bei dem die Drehzahl kleiner als die Schaltdrehzahl ist, erfolgt die Frischgaszuführung ausschließlich im frühen Einlasszeitfenster, wodurch ein frühes Einlassschließen realisierbar ist. Im Unterschied dazu wird beim "oberen" Teilbereich des Schaltbetriebsbereich, bei dem die Drehzahl zwischen der Schaltdrehzahl und der Grenzdrehzahl liegt und/oder bei dem die Last zwischen der Schaltlast und der Grenzlast liegt, das späte Einlasszeitfenster zur Frischgasbeladung des jeweiligen Brennraums genutzt, wodurch ein spätes Einlassöffnen realisiert wird. Es hat sich gezeigt, dass durch diese Vorgehensweise bei kleinen Lasten die Schadstoffemissionen und Verbrauchswerte der Brennkraftmaschine verbessert werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 bis 3: jeweils eine stark vereinfachte Schnittdar- stellung einer Brennkraftmaschine im Bereich eines Einlassventils, bei unterschiedlichen Ventilhüben,
- Fig. 4 und 5: jeweils ein Diagramm zur Veranschaulichung des zeitlichen Verlaufs eines Einlassventilhubs und von Schaltstellungen eines Zusatzventils, bei verschiedenen Betriebszuständen der Brenn- kraftmaschine,
- Fig. 6 und 7: jeweils eine Innenansicht eines Zylinders aus dem Blickwinkel eines Kolbens auf Ladungswech- selventile, jedoch bei verschiedenen Ausfüh- rungsformen.

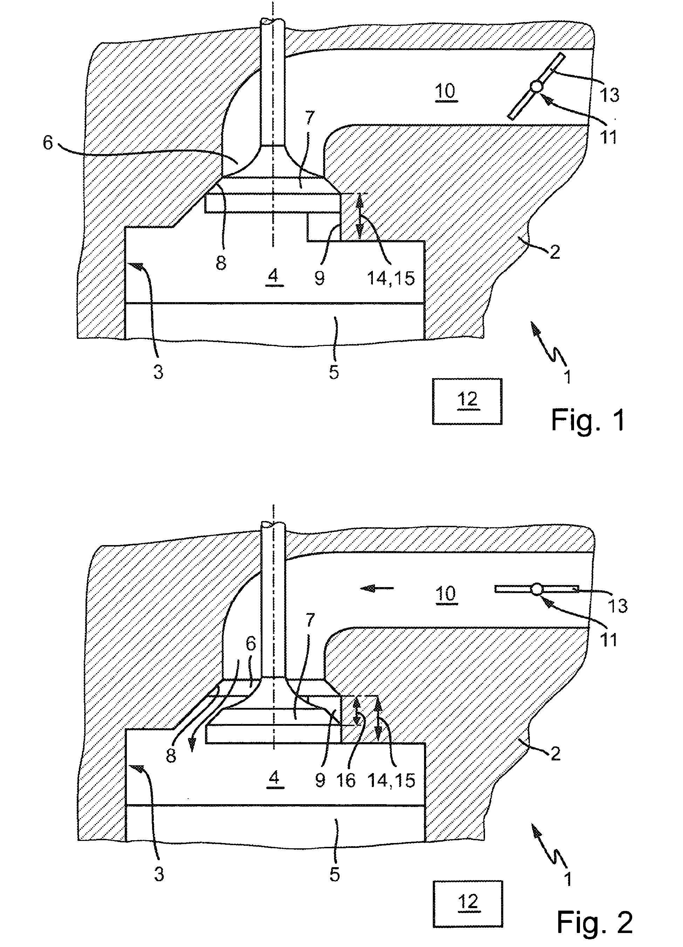

Entsprechend den Fig. 1 bis 3 umfasst eine Brennkraftmaschine 1, die vorzugsweise in einem Kraftfahrzeug angeordnet ist, einen Motorblock 2, in dem zumindest ein Zylinder 3 ausgebildet ist. Bei der Brennkraftmaschine 1 kann es sich um einen Dieselmotor oder bevorzugt um einen Ottomotor handeln. Es ist klar, dass die Brennkraftmaschine 1 üblicherweise mehr als einen Zylinder 3 aufweist. Diese können grundsätzlich gleich wie der hier dargestellte Zylinder 3 ausgestaltet sein. Der jeweilige Zylinder 3 begrenzt einen Brennraum 4. Im Zylinder 3 ist in üblicher Weise ein Kolben 5 hubverstellbar angeordnet. Der Zylinder 3 weist außerdem wenigstens eine Einlassöffnung 6 auf, durch die Frischgas in den Brennraum 4 einströmbar ist. Der Einlassöffnung 6 ist ein Einlassventil 7 zugeordnet, das zum Steuern der Einlassöffnung 6 mit einem Ventilsitz 8 zusammenwirkt.

Bei der gezeigten Einlassöffnung 6 ist eine Leitmaskierung 9 vorgesehen. Diese fasst den Ventilsitz 8 an einer dem Brennraum 4 zugewandten Seite entlang eines begrenzten Umfangsabschnitts, z.B. über etwa 120° bis 180°, seitlich ein. Zur Versorgung der jeweiligen Einlassöffnung 6 mit Frischgas ist ein daran angeschlossener Einlasskanal 10 vorgesehen.

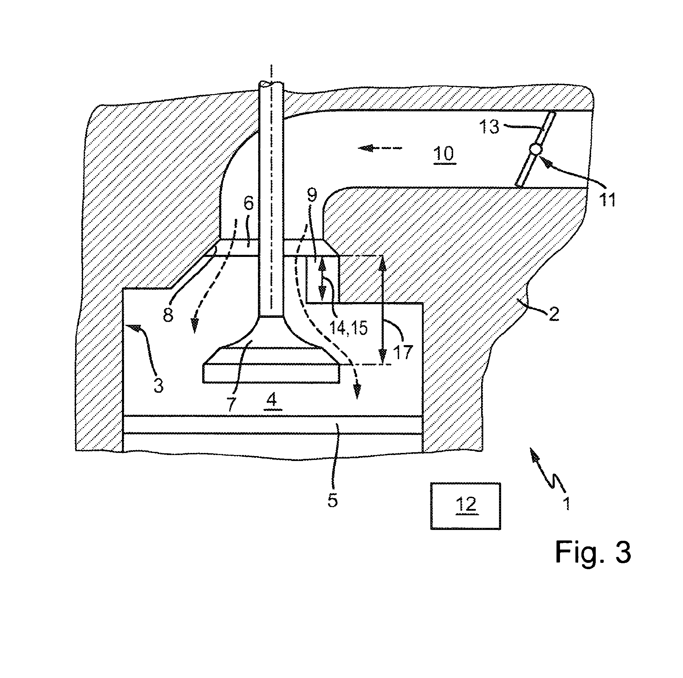

Erfindungsgemäß ist nun in dem zur maskierten Einlassöffnung 6 führenden Einlasskanal 10 ein Zusatzventil 11 angeordnet, mit dem der Einlasskanal 10 steuerbar ist, also geöffnet und gesperrt werden kann. Zur Betätigung des Zusatzventils 11 ist eine Ventilsteuerung 12 vorgesehen, die hier lediglich symbolisch angedeutet ist. Diese Ventilsteuerung 12 kommuniziert mit einem nicht dargestellten Stellantrieb des Zusatzventils 11, um ein im Einlasskanal 10 angeordnetes Ventilglied 13 zumindest zwischen einer in Fig. 2 gezeigten Offenstellung und einer in Fig. 3 gezeigten Schließstellung zu verstellen. Fig. 1 zeigt eine mögliche Neutralstellung oder Zwischenstellung des Ventilglieds 13.

Beim jeweiligen Zusatzventil 11 kann es sich um ein schnellschaltendes Ventil handeln, das insbesondere im Millisekundenbereich zwischen der Schließstellung und der Offenstellung umschaltbar ist. Insbesondere kann ein schnellschaltendes Ventil schneller als das Einlassventil 7 öffnen und schließen. Desweiteren kann es sich beim Zusatzventil 11 um ein dynamisch ansteuerbares Ventil handeln, wodurch die Schaltzeitpunkte und Schaltgeschwindigkeiten des Zusatzventils 11 an den aktuellen Betriebszustand der Brennkraftmaschine 1, der sich durch Last und Drehzahl definiert, adaptierbar sind. Zusätzlich oder alternativ kann das Zusatzventil 11 als diskontinuierlich arbeitendes oder als kontinuierlich arbeitendes Ventil ausgestaltet sein. Bei einem diskontinuierlich arbeitenden Ventil ist das jeweilige Ventilglied 13, z.B. eine Schmetterlingsklappe, zwischen der Offenstellung und der Schließstellung umschaltbar, wobei charakteristisch ist, dass das jeweilige Ventilglied 13 in der jeweiligen Schaltstellung bis zum nächsten Schaltvorgang ruht. Ferner kann die Bewegungsrichtung zwischen aufeinander folgenden Schaltvorgängen jeweils entgegenrichtet sein. Bei einem kontinuierlich arbeitenden Ventil ist das jeweilige Ventilglied 13 permanent in Bewegung und durchläuft die beiden Schaltzustände. Hierbei können Öffnungszeitfenster und Schließzeitfenster realisiert werden. Beispielsweise kann ein kontinuierlich arbeitendes Ventil als Ventilglied 13 einen Drehschieber oder eine Klappe aufweisen, die stets in der gleichen Bewegungsrichtung rotieren.

In den Fig. 1 bis 3 ist eine Höhe der Leitmaskierung 9 mit 14 bezeichnet. Diese Höhe 14 entspricht der Erstreckung der Leitmaskierung 9 vom unteren Ende des Ventilsitzes 8 in Richtung des Hubs des Einlassventils 7 in den Brennraum 4 hinein. Diese Höhe 14 der Leitmaskierung 9 kann zweckmäßig zur Definition eines Schalthubs 15 für das Einlassventil 7 verwendet werden. Der Schalthub 15 kann z.B. so groß gewählt werden wie die Höhe 14. Der Einfachheit halber ist der Schalthub 15 in den gezeigten Beispielen der Höhe 14 der Leitmaskierung 9 gleichgesetzt. Grundsätzlich kann der Schalthub 15 jedoch auch einen kleineren Wert als die Höhe 14 aufweisen oder auch einen größeren Wert, so dass bei Vorliegen des Schalthubs 15 die Maskierung 9 gerade noch nicht aktiv ist oder gerade nicht mehr aktiv ist.

In Fig. 1 ist das Einlassventil 7 geschlossen, so dass der Einlassventilhub in Fig. 1 den Wert Null aufweist. In Fig. 2 weist das Einlassventil 7 einen kleinen Hub 16 auf, der kleiner ist als die Höhe 14 und der insbesondere kleiner ist als der genannte Schalthub 15.

Bei einem solchen kleinen Ventilhub 16 ist die Leitmaskierung 9 aktiv, so dass das Einlassventil 7 nur in einem nicht von der Leitmaschine 9 abgeschirmten Teilbereich seines Umfangs umströmbar ist, was durch einen mit durchgezogener Linie dargestellten Pfeil symbolisiert ist. Im Unterschied dazu zeigt Fig. 3 einen Zustand, bei dem das Einlassventil 7 einen größeren Ventilhub 17 aufweist, der größer ist als der Schalthub 15, so dass das Einlassventil 7 über die Leitmaskierung 9 in den Brennraum 4 hineinragt. Hierdurch ist die Leitmaskierung 9 deaktiviert, so dass sich eine allseitige Umströmung des Einlassventils 7 also auch im Umfangsbericht der Leitmaschine 9 einstellen kann. Diese Umströmung ist in Fig. 3 durch mit unterbrochener Linie dargestellte Pfeile angedeutet. Bei dem in Fig. 3 dargestellten Zustand findet eine derartige allseitige Umströmung des Einlassventils 7 allerdings nicht statt, da hier das Zusatzventil 11 den Einlasskanal 10 sperrt.

Die Brennkraftmaschine 1 kann vorzugsweise wie folgt betrieben werden:
Mit Hilfe einer vorbestimmten Grenzlast und/oder mit Hilfe einer vorbestimmten Grenzdrehzahl wird ein Schaltbetriebsbereich für die Brennkraftmaschine 1 definiert. In diesem Schaltbetriebsbereich ist die Last kleiner als die Grenzlast und/oder ist die Drehzahl kleiner als die Grenzdrehzahl. In diesem Schaltbetriebsbereich soll mit Hilfe der Leitmaskierung 9 eine gerichtete Einströmung von Frischgas in den Brennraum 4 realisiert werden. Zu diesem Zweck wird mit Hilfe der Ventilsteuerung 12 das jeweilige Zusatzventil 11 so angesteuert, dass es den jeweiligen Einlasskanal 10 sperrt, solange der Hub des zugehörigen Einlassventils 7 größer ist als der Schalthub 15. Dementsprechend ist bei dem in Fig. 3 gezeigten Zustand das Zusatzventil 11 in seine Sperrstellung verstellt. Eine Einströmung von Frischgas in den Brennraum 4 findet nicht statt. Eine Einströmung von Frischgas in den Brennraum 4 soll somit nur bei Hüben des Einlassventils 7 erfolgen, die kleiner als der Schalthub 15 sind.

Innerhalb jedes Einlasszeitfensters besitzt das jeweilige Einlassventil 7 zwei Bereiche, in denen seine Hübe kleiner als der Schalthub 15 sind, nämlich zu Beginn des Einlassvorgangs, bei dem der Einlasshub vom Wert Null ausgehend zunimmt, und zum Ende hin der Schließbewegung des Einlassventils 7, bei dem sich sein Hub wieder dem Wert Null nähert. Somit kann sich der in Fig. 2 gezeigte Zustand sowohl in einem frühen Teilfenster des Einlasszeitfensters als auch in einem späten Teilfenster des Einlasszeitfensters einstellen.

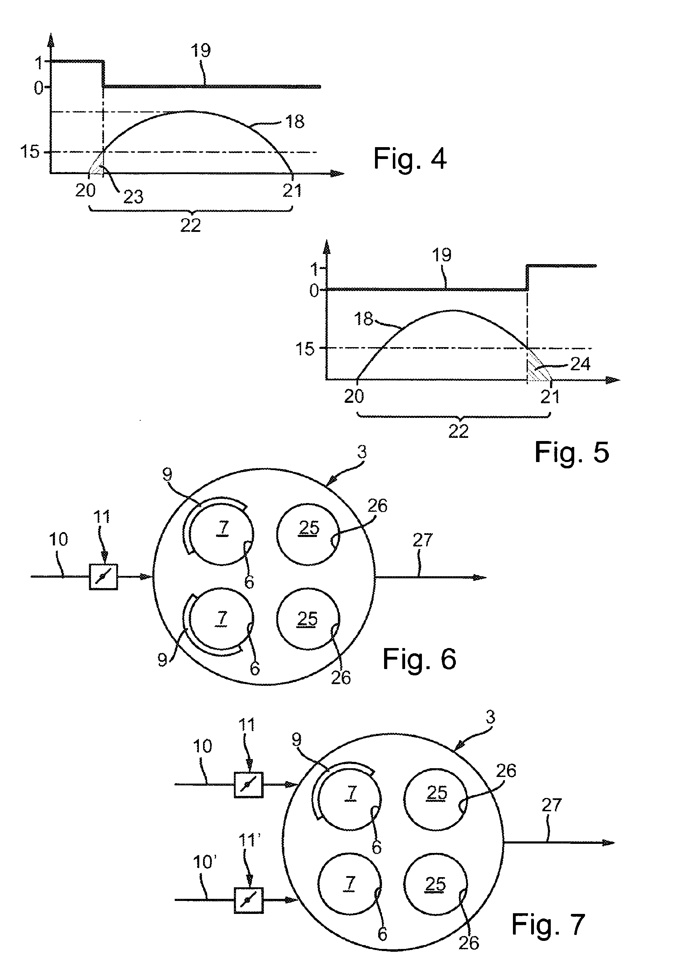

Mit Bezug auf die Fig. 4 und 5 werden bevorzugte Ausführungsformen näher erläutert. In den Fig. 4 und 5 sind in Abhängigkeit von der Zeit bzw. des Kurbelwellenwinkels (Abszisse) ein Hubverlauf 18 des Einlassventils 7 und ein Schaltzustandsverlauf 19 des Zusatzventils 11 (Ordinate) wiedergegeben. Das Einlassventil 7 definiert durch einen Öffnungszeitpunkt 20 und einen Schließzeitpunkt 21 ein Einlasszeitfenster 22. In den Hubverlauf 18 ist außerdem mit unterbrochener Linie der Schalthub 15 eingetragen.

Das Zusatzventil 7 besitzt eine quasi digitalen Schaltzustandverlauf 19. Der Wert "0" repräsentiert die Schließstellung des Zusatzventils 11, während der Wert "1" die Offenstellung des Zusatzventils 11 repräsentiert.

Fig. 4 zeigt einen "unteren" Teilbereich des Schaltbetriebsbereichs, der sich dadurch charakterisiert, dass die Last kleiner ist als eine vorbestimmte Schaltlast und/oder dass die Drehzahl kleiner ist als eine vorbestimmte Schaltdrehzahl. Dabei ist die genannte Schaltlast jedenfalls kleiner als die Grenzlast und/oder die Schaltdrehzahl ist kleiner als die genannte Grenzdrehzahl. Mit Hilfe der Schaltdrehzahl und/oder der Schaltlast werden somit im Schaltbetriebsbereich der untere Teilbereich von einem "oberen" Teilbereich des Schaltbetriebsbereichs voneinander abgegrenzt. Der obere Teilbereich ist durch Lasten definiert, die größer sind als die Schaltlast und kleiner sind als die Grenzlast und/oder durch Drehzahlen, die größer sind als die Schaltdrehzahl und kleiner sind als die Grenzdrehzahl.

Wenn die Brennkraftmaschine im unteren Teilbereich des Schaltbetriebsbereich betrieben wird, wird mit Hilfe der Ventilsteuerung 12 das jeweilige Zusatzventil 11 so angesteuert, dass es den zugehörigen Einlasskanal 10 erst dann sperrt, wenn der Hub des der maskierten Einlassöffnung 6 zugeordneten Einlassventils 7 beim Öffnen, also quasi "von unten" den Schalthub 15 erreicht. Hierdurch wird aus dem Einlasszeitfenster 22 ein vergleichsweise kleines frühes Teilfenster 23 ausgeschnitten, wodurch ein frühes Einlassschließen realisiert wird. Für den nächsten Beladungsvorgang kann das Zusatzventil 11 grundsätzlich zu einem beliebigen Zeitpunkt zwischen dem Schließzeitpunkt 21 des Einlassventils 7 und dem nächsten Öffnungszeitpunkt 20 des Einlassventils 7 wieder in die Offenstellung verstellt werden. Insbesondere ist denkbar, das Zusatzventil 11 gleichzeitig mit dem Einlassventil 7 zu öffnen, beispielsweise um eine impulsartige Beladung des Brennraums 4 mit Frischgas zu erzielen.

Wird im Unterschied dazu die Brennkraftmaschine 1 im oberen Teilbereich des Schaltbetriebsbereichs betrieben, wird das Zusatzventil 11 mit Hilfe der Ventilsteuerung 12 so angesteuert, dass es den jeweiligen Einlasskanal 10 erst dann öffnet, wenn das zugehörige Einlassventil 7 beim Schließen, also quasi "von oben" den Schalthub 15 erreicht. Hierdurch wird gemäß Fig. 5 aus dem Öffnungszeitfenster 22 ein vergleichsweise kleines spätes Teilfenster 24 ausgeschnitten, wodurch ein spätes Einlassöffnen realisiert wird. Das Zusatzventil 11 kann grundsätzlich zu einem beliebigen Zeitpunkt nach dem Schließzeitpunkt 21 des Einlassventils 7 und vor dem nächsten Öffnungszeitpunkt 20 des Einlassventils 7 wieder geschlossen werden.

Es ist klar, dass der Schalthub 15 auch so festgelegt werden kann, dass beim frühen Einlassschließen bereits eine vollständige Umströmung des Einlassventils 7 entstehen kann oder dass beim späten Einlassöffnen noch eine vollständige Umströmung des Einlassventils 7 stattfinden kann, bevor die Maskierung 9 aktiv wird und die bis dahin eingesaugte Luftmasse mit der nachströmenden Luft mit einem Drall beaufschlagt.

Ebenso können beim Öffnen und beim Schließen unterschiedliche Schalthübe 15 wirksam sein. Auch ist eine Abhängigkeit des jeweiligen Schalthubs 15 vom Betriebszustand der Brennkraftmaschine 1 denkbar.

Entsprechend Fig. 6 kann der Zylinder 3 beispielsweise zwei Einlassventile 7 und z.B. zwei Auslassventile 25 aufweisen. Den beiden Einlassventilen 7 bzw. den beiden zugehörigen Einlassöffnungen 6 ist ein gemeinsamer Einlasskanal 10 zugeordnet, der mit einem solchen Zusatzventil 11 steuerbar ist. Beide Einlassöffnungen 6 sind hier maskiert, also mit einer Leitmaskierung 9 versehen. Die Leitmaskierungen 9 sind dabei zur Zylinderwand hin positioniert und zum Zentrum des Zylinders 3 hin offen, wodurch eine in das Zentrum des Brennraums 4 hin orientierte Einströmung realisierbar ist. Den beiden Auslassventilen 25 bzw. zugehörigen Auslassöffnungen 26 ist hier ein gemeinsamer Auslasskanal 27 zugeordnet.

Fig. 7 zeigt eine Ausführungsform, bei der dem jeweiligen Zylinder 3 ebenfalls zwei Einlassöffnungen 6 mit zwei Einlassventilen 7 und zwei Auslassöffnungen 26 mit zwei Auslassventilen 25 zugeordnet sind. Bei dieser Ausführungsform ist jedoch nur eine der Einlassöffnungen 6 mit Hilfe einer Leitmaskierung 9 maskiert. Die andere Einlassöffnung 6 ist unmaskiert. Bei dieser Ausführungsform sind den beiden Einlassöffnungen 6 separate Einlasskanäle 10 und 10' zugeordnet. Der zur maskierten Einlassöffnung 6 führende Einlasskanal 10 ist mit dem Zusatzventil 11 steuerbar. Dem anderen Einlasskanal 10', der zur nicht maskierten Einlassöffnung 6 führt, kann ebenfalls ein Zusatzventil 11' zugeordnet sein, das grundsätzlich jedoch von einer anderen Bauart als das dem zur maskierten Einlassöffnung 6 führenden Einlasskanal 10 zugeordnete Zusatzventil 11 sein kann. Ebenso kann das diesem anderen Einlasskanal 10' zugeordnete Einlassventil 6 aktivierbar und deaktivierbar ausgestaltet sein. Bei der in Fig. 7 gezeigten Ausführungsform kann das Betriebsverfahren beispielsweise dahingehend modifiziert werden, dass im Schaltbetriebsbereich der zum nicht maskierten Einlassventil 6 führende Einlasskanal 10' mit Hilfe des dort angeordneten Zusatzventils 11' oder mit Hilfe des zugehörigen, in seiner Schließstellung deaktivierten Einlassventils 6 permanent gesperrt ist, so dass die Frischgasbeladung ausschließlich über die maskierte Einlassöffnung 6 erfolgt. Die Steuerung des zur maskierten Einlassöffnung 6 führenden Einlasskanals 10 mit dem zugehörigen Zusatzventil 11 kann dann insbesondere entsprechend der weiter oben beschriebenen Vorgehensweise erfolgen.

## Patentansprüche

1. Brennkraftmaschine, insbesondere in einem Kraftfahrzeug,
- mit wenigstens einem Zylinder (3), der einen Brennraum (4) begrenzt und in dem ein Kolben (5) hubverstellbar ist,
- wobei jeder Zylinder (3) zumindest eine Einlassöffnung (6) für Frischgas aufweist,
- wobei jeder Einlassöffnung (6) ein Einlassventil (7) zugeordnet ist, das zum Steuern der Einlassöffnung (6) mit einem zugehörigen Ventilsitz (8) zusammenwirkt,
- wobei bei wenigstens einer solchen Einlassöffnung (6) eine Leitmaskierung (9) vorgesehen ist, die den jeweiligen Ventilsitz (8) an einer dem jeweiligen Brennraum (4) zugewandten Seite entlang eines begrenzten Umfangsabschnitts seitlich einfasst,
- wobei jede Einlassöffnung (6) einem Einlasskanal (10) zugeordnet ist,
- wobei zumindest einem zu einer maskierten Einlassöffnung (6) führenden Einlasskanal (10) ein Zusatzventil (11) zum Steuern des Einlasskanals (10) zugeordnet ist,
- wobei eine Ventilsteuerung (12) zum Betätigen des jeweiligen Zusatzventils (11) vorgesehen ist, die so ausgestaltet ist, dass sie das Zusatzventil (11) bei vorbestimmten Betriebszuständen der Brennkraftmaschine (1) zum Öffnen und Sperren des jeweiligen Einlasskanals (10) in Abhängigkeit des Hubs des der jeweiligen maskierten Einlassöffnung (6) zugeordneten Einlassventils (7) ansteuert,
**dadurch gekennzeichnet,**
**dass** die Ventilsteuerung (12) so ausgestaltet ist, dass sie das Zusatzventil (11) in Abhängigkeit des aktuellen Betriebszustands der Brennkraftmaschine (1) zum Sperren des jeweiligen Einlasskanals (10) ansteuert, solange das der jeweiligen maskierten Einlassöffnung (6) zugeordnete Einlassventil (7) einen Hub aufweist, der größer ist als ein vorbestimmter Schalthub (15).

2. Brennkraftmaschine nach Anspruch 1,
**dadurch gekennzeichnet,**
**dass** die Ventilsteuerung (12) so ausgestaltet ist, dass sie das Zusatzventil (11) in Abhängigkeit des aktuellen Betriebszustands der Brennkraftmaschine (1) erst dann zum Sperren des jeweiligen Einlasskanals (10) ansteuert, wenn das der jeweiligen maskierten Einlassöffnung (6) zugeordnete Einlassventil (7) beim Öffnen den Schalthub (15) erreicht.

3. Brennkraftmaschine nach Anspruch 1 oder 2,
**dadurch gekennzeichnet,**
**dass** die Ventilsteuerung (12) so ausgestaltet ist, dass sie das Zusatzventil (11) in Abhängigkeit des aktuellen Betriebszustands der Brennkraftmaschine (1) zum Öffnen des jeweilige Einlasskanals (10) ansteuert, wenn das der jeweiligen maskierten Einlassöffnung (6) zugeordnete Einlassventil (7) beim Schließen den Schalthub (15) erreicht.

4. Brennkraftmaschine nach einem der Ansprüche 1 bis 3,
**dadurch gekennzeichnet,**
**dass** der Schalthub (15) durch den Hub gebildet ist, den das jeweilige Einlassventil (7) durchführen muss, um von der Leitmaskierung (9) frei zu kommen.

5. Brennkraftmaschine nach einem der Ansprüche 1 bis 4,
**dadurch gekennzeichnet,**
**dass** die Ventilsteuerung (12) so ausgestaltet ist, dass sie das Zusatzventil (11) zum Öffnen und Sperren des jeweiligen Einlasskanals (10) ansteuert, wenn die Brennkraftmaschine (1) in einem Schaltbetriebszustand betrieben wird, in dem die Last unterhalb einer vorbestimmten Grenzlast liegt und/oder in dem die Drehzahl unterhalb einer vorbestimmten Grenzdrehzahl liegt.

6. Brennkraftmaschine nach Anspruch 5,
**dadurch gekennzeichnet,**
**dass** die Ventilsteuerung (12) so ausgestaltet ist, dass sie das Zusatzventil (11) in einem unteren Teilbereich des Schaltbetriebszustands, in dem die Last kleiner als eine vorbestimmte Schaltlast ist und/oder in dem die Drehzahl kleiner als eine vorbestimmte Schaltdrehzahl ist, erst dann zum Sperren des jeweiligen Einlasskanals (10) ansteuert, wenn das der jeweiligen maskierten Einlassöffnung (6) zugeordnete Einlassventil (7) beim Öffnen den Schalthub (15) erreicht.

7. Brennkraftmaschine nach Anspruch 5 oder 6,
**dadurch gekennzeichnet,**
**dass** die Ventilsteuerung (12) so ausgestaltet ist, dass sie das Zusatzventil (11) in einem oberen Teilbereich des Schaltbetriebszustands, in dem die Last größer als eine vorbestimmte Schaltlast ist und/oder in dem die Drehzahl größer als eine vorbestimmte Schaltdrehzahl ist, erst dann zum Öffnen des jeweiligen Einlasskanals (10) ansteuert, wenn das der jeweiligen maskierten Einlassöffnung (6) zugeordnete Einlassventil (7) beim Schließen den Schalthub (15) erreicht.

8. Brennkraftmaschine nach einem der Ansprüche 1 bis 7,
**dadurch gekennzeichnet,**
- **dass** je Zylinder (3) zumindest zwei Einlassöffnungen (6) vorgesehen sind, die jeweils mit voneinander getrennten Einlasskanälen (10, 10') kommunizieren,
- **dass** nur eine dieser Einlassöffnungen (6) mit einer solchen Leitmaskierung (9) versehen ist,
- **dass** beiden Einlasskanälen (10, 10') je ein Zusatzventil (11, 11') zugeordnet ist.

9. Verfahren zum Betreiben einer Brennkraftmaschine (1) nach einem der Ansprüche 1 bis 8,
**dadurch gekennzeichnet,**
**dass** bei einem Schaltbetriebsbereich der Brennkraftmaschine, in dem die Last der Brennkraftmaschine (1) kleiner als eine vorbestimmte Grenzlast ist und/oder in dem die Drehzahl der Brennkraftmaschine (1) kleiner als eine vorbestimmte Grenzdrehzahl ist, das jeweilige Zusatzventil (11) den jeweiligen Einlasskanals (10) sperrt, solange der Hub des der jeweiligen maskierten Einlassöffnung (6) zugeordneten Einlassventils (7) größer ist als ein vorbestimmter Schalthub (15).

10. Verfahren nach Anspruch 9,
**dadurch gekennzeichnet,**
**dass** bei einem unteren Teilbereich des Schaltbetriebsbereichs, in dem die Last kleiner als eine vorbestimmte Schaltlast ist und/oder in dem die Drehzahl kleiner als eine vorbestimmte Schaltdrehzahl ist, das jeweilige Zusatzventil (11) den jeweiligen Einlasskanal (10) erst dann sperrt, wenn der Hub des der jeweiligen maskierten Einlassöffnung (6) zugeordneten Einlassventils (7) beim Öffnungshub den Schalthub (15) erreicht.

11. Verfahren nach Anspruch 9 oder 10,
**dadurch gekennzeichnet,**
**dass** bei einem oberen Teilbereich des Schaltbetriebsbereichs, in dem die Last größer als eine vorbestimmte Schaltlast ist und/oder in dem die Drehzahl größer als eine vorbestimmte Schaltdrehzahl ist, das jeweilige Zusatzventil (11) den jeweiligen Einlasskanal (10) erst dann öffnet, wenn der Hub des der jeweiligen maskierten Einlassöffnung (6) zugeordneten Einlassventils (7) beim Schließhub den Schalthub (15) erreicht.

## Claims

1. An internal combustion engine, in particular in a motor vehicle,
- with at least one cylinder (3) that delimits a combustion chamber (4) and in which a piston (5) can be adjusted with regard to stroke,
- wherein each cylinder (3) has at least one intake opening (6) for a fresh mixture,
- wherein each intake opening (6) is associated with an intake valve (7) that works together with an associated valve seat (8) in order to control the intake opening (6),
- wherein at least one such intake opening (6) is provided with a guide mask (9) that laterally encloses the respective valve seat (8) on a side that is opposite the respective combustion chamber (4) along a delimited circumferential section,
- wherein each intake opening (6) is associated with an intake canal (10),
- wherein at least one intake canal (10) leading to a masked intake opening (6) is associated with an additional valve (11) for controlling the intake canal (10),
- wherein an valve control (12) is provided for actuating the respective additional valve (11), said valve control being configured in such a manner that it drives the additional valve (11) at pre-determined operational states of the internal combustion engine (1) in order to open and block the respective intake canal (10) as a function of the stroke of the intake valve (7) associated with the respective masked intake opening (6),
**characterised in that**
the valve control (12) is designed in such a manner that it drives the additional valve (11) as a function of the current operational state of the internal combustion engine (1) in order to block the respective intake canal (10) as long as the intake valve (7) associated with respective masked intake opening (6) has a stroke that is larger than a pre-determined switching stroke (15).

2. The internal combustion engine as specified in claim 1,
**characterised in that**
the valve control (12) is configured in such a manner that it drives the additional valve (11) as a function of the current operational state of the internal combustion engine (1) in order to block he respective intake canal (10) only when the intake valve (7) associated with the respective masked intake opening (6) reached the switching stroke (15) upon opening.

3. The internal combustion engine as specified in claim 1 or claim 2,
**characterised in that**
the valve control (12) is designed in such a manner that it drives the additional valve (11) as a function of the current operational state of the internal combustion engine (1) to open the respective intake canal (10) if the intake valve (7) associated with the respective masked intake opening (6) reaches the switching stroke (15) upon closing.

4. The internal combustion engine as specified in any one of the claims 1 to 3,
**characterised in that**
the switching stroke (15) is formed by the stroke that the respective intake valve (7) must carry out in order to free itself from the guide mask (9).

5. The internal combustion engine as specified in any one of the claims 1 to 4,
**characterised in that**
the valve control (12) is configured in such a manner that it drives the additional valve (11) to open and to block the respective intake canal (10) if the internal combustion engine (1) is operated in a switching operation state in which the load is below a pre-determined maximum load and/or in which the rotational speed is below a pre-determined maximum rotational speed.

6. The internal combustion engine as specified in claim 5,
**characterised in that**
the valve control (12) is designed in such a manner that it drives the additional valve (11) in a lower partial range of the switching operational state, in which the load is smaller than a pre-determined switching load and/or in which the rotational speed is smaller than a pre-determined switching rotational speed, to block the respective intake canal (10) only if the intake valve (7) associated with the respective masked intake opening (6) reaches the switching stroke (15) upon opening.

7. The internal combustion engine as specified in claim 5 or claim 6,
**characterised in that**
the valve control (12) is configured in such a manner that it drives the additional valve (11) in an upper partial range of the switching operational state, in which the load is larger than a pre-determined switching load and/or in which the rotational speed is larger than a pre-determined switching rotational speed, to open the respective intake canal (10) only
if the intake valve (7) associated with the respective masked intake opening (6) reaches the switching stroke (15) upon closing.

8. The internal combustion engine as specified in any one of the claims 1 to 7,
**characterised in that**
- at least two intake openings (6) are provided per cylinder (3), said intake openings communicating with intake canals (10, 10') that are separated from one another,
- only one of these intake openings (6) is provided with such a guide mask (9),
- both of the intake canals (10, 10') is each associated with one additional valve (11, 11').

9. A method for operating an internal combustion engine (1) as specified in any one of the claims 1 to 8,
**characterised in that**
with a switching operation range of the internal combustion engine in which the load of the internal combustion engine (1) is smaller than a pre-determined maximum load and/or in which the rotational speed of the internal combustion engine (1) is smaller than a pre-determined maximum rotational speed, the respective additional valve (11) blocks the respective intake canal (10) so long as the stroke of the intake valve (7) associated with the respective masked intake opening (6) is larger than a pre-determined switching stroke (15).

10. The method as specified in claim 9,
**characterised in that**
in an lower partial range of the switching operation range, in which the load is smaller than a pre-determined switching load and/or in which the rotational speed is smaller than a pre-determined maximum rotational speed, the respective additional valve (11) only first blocking the respective intake canal (10) if the stroke of the intake valve (7) associated with the respective masked intake opening (6) reaches the switching stroke (15) upon the opening stroke.

11. The method as specified in claim 9 or claim 10,
**characterised in that**
in an upper partial range of the switching operation range, in which the load is larger than a pre-determined switching load and/or in which the rotational speed is larger than a pre-determined switching rotational speed, the respective additional valve (11) only first opening the respective intake canal (10) if the stroke of the intake valve (7) associated with the respective masked intake opening (6) reaches the switching stroke (15) upon the closing stroke.

## Revendications

1. Moteur à combustion interne, en particulier dans un véhicule automobile,
- comprenant au moins un cylindre (3), qui limite une chambre de combustion (4) et dans lequel un piston (5) peut se déplacer,
- chaque cylindre (3) présentant au moins une ouverture d'admission (6) pour du gaz frais,
- chaque ouverture d'admission (6) étant associée à une soupape d'admission (7), qui coopère avec un siège de soupape associé (8) pour commander l'ouverture d'admission (6),
- dans le cas d'au moins une telle ouverture d'admission (6), un masquage de guidage (9) étant prévu, lequel borde latéralement le siège de soupape respectif (8) au niveau d'un côté tourné vers la chambre de combustion respective (4) le long d'une portion périphérique limitée,
- chaque ouverture d'admission (6) étant associée à un canal d'admission (10),
- au moins une soupape supplémentaire (11) pour commander le canal d'admission (10) étant associée à au moins un canal d'admission (10) conduisant à une ouverture d'admission masquée (6),
- une commande de soupape (12) étant prévue pour commander la soupape supplémentaire (11) respective, laquelle est configurée de telle sorte qu'elle commande la soupape supplémentaire (11) dans des états de fonctionnement prédéterminés du moteur à combustion interne (1), de manière à ce qu'elle ouvre et ferme le canal d'admission respectif (10) en fonction de la course de la soupape d'admission (7) associée à l'ouverture d'admission masquée respective (6),
**caractérisé en ce que**
la commande de soupape (12) est configurée de telle sorte qu'elle commande la soupape supplémentaire (11), en fonction de l'état de fonctionnement actuel du moteur à combustion interne (1), de manière à ce qu'elle ferme le canal d'admission respectif (10) tant que la soupape d'admission (7) associée à l'ouverture d'admission masquée respective (6) présente une course qui est supérieure à une course de commutation prédéterminée (15).

2. Moteur à combustion interne selon la revendication 1,
**caractérisé en ce que**
la commande de soupape (12) est configurée de telle sorte qu'elle commande la soupape supplémentaire (11), en fonction de l'état de fonctionnement actuel du moteur à combustion interne (1), de manière à ce qu'elle ferme le canal d'admission respectif (10) seulement quand la soupape d'admission (7) associée à l'ouverture d'admission masquée respective (6) atteint la course de commutation (15) lors de l'ouverture.

3. Moteur à combustion interne selon la revendication 1 ou 2,
**caractérisé en ce que**
la commande de soupape (12) est configurée de telle sorte qu'elle commande la soupape supplémentaire (11), en fonction de l'état de fonctionnement actuel du moteur à combustion interne (1), de manière à ce qu'elle ouvre le canal d'admission respectif (10), quand la soupape d'admission (7) associée à l'ouverture d'admission masquée respective (6) atteint la course de commutation (15) lors de la fermeture.

4. Moteur à combustion interne selon l'une quelconque des revendications 1 à 3,
**caractérisé en ce que**
la course de commutation (15) est formée par la course que la soupape d'admission respective (7) doit parcourir pour se libérer du masquage de guidage (9).

5. Moteur à combustion interne selon l'une quelconque des revendications 1 à 4,
**caractérisé en ce que**
la commande de soupape (12) est configurée de telle sorte qu'elle commande la soupape supplémentaire (11) de manière à ce qu'elle ouvre et ferme le canal d'admission respectif (10) quand le moteur à combustion interne (1) est entraîné dans un état de fonctionnement de commutation, dans lequel la charge est en dessous d'une charge limite prédéterminée, et/ou dans lequel le régime est en dessous d'un régime limite prédéterminé.

6. Moteur à combustion interne selon la revendication 5,
**caractérisé en ce que**
la commande de soupape (12) est configurée de telle sorte qu'elle commande la soupape supplémentaire (11) dans une plage partielle inférieure de l'état de fonctionnement de commutation, dans lequel la charge est inférieure à une charge de commutation prédéterminée, et/ou dans lequel le régime est inférieur à un régime de commutation prédéterminé, de manière à ce qu'elle ferme le canal d'admission respectif (10) seulement quand la soupape d'admission (7) associée à l'ouverture d'admission masquée respective (6) atteint la course de commutation (15) lors de l'ouverture.

7. Moteur à combustion interne selon la revendication 5 ou 6,
**caractérisé en ce que**
la commande de soupape (12) est configurée de telle sorte qu'elle commande la soupape supplémentaire (11) dans une plage partielle supérieure de l'état de fonctionnement de commutation, dans lequel la charge est supérieure à une charge de commutation prédéterminée, et/ou dans lequel le régime est supérieur à un régime de commutation prédéterminé, de manière à ce qu'elle ouvre le canal d'admission respectif (10) seulement quand la soupape d'admission (7) associée à l'ouverture d'admission masquée respective (6) atteint la course de commutation (15) lors de la fermeture.

8. Moteur à combustion interne selon l'une quelconque des revendications 1 à 7, **caractérisé en ce que**
- chaque cylindre (3) présente au moins deux ouvertures d'admission (6), qui communiquent à chaque fois avec des canaux d'admission (10, 10') séparés l'un de l'autre,
- seulement l'une de ces ouvertures d'admission (6) est pourvue d'un tel masquage de guidage (9),
- les deux canaux d'admission (10, 10') sont associés à chaque fois à une soupape supplémentaire (11, 11').

9. Procédé pour faire fonctionner un moteur à combustion interne (1) selon l'une quelconque des revendications 1 à 8,
**caractérisé en ce que**
dans une plage de fonctionnement de commutation du moteur à combustion interne, dans laquelle la charge du moteur à combustion interne (1) est inférieure à une charge limite prédéterminée et/ou dans laquelle le régime du moteur à combustion interne (1) est inférieur à un régime limite prédéterminé, la soupape supplémentaire respective (11) ferme le canal d'admission respectif (10), tant que la course de la soupape d'admission (7) associée à l'ouverture d'admission masquée respective (6) est supérieure à une course de commutation prédéterminée (15).

10. Procédé selon la revendication 9,
**caractérisé en ce que**
dans une plage partielle inférieure de la plage de fonctionnement de commutation, dans laquelle la charge est inférieure à une charge de commutation prédéterminée et/ou dans laquelle le régime est inférieur à un régime de commutation prédéterminé, la soupape supplémentaire respective (11) ferme le canal d'admission respectif (10), seulement quand la course de la soupape d'admission (7) associée à l'ouverture d'admission masquée respective (6) atteint la course de commutation (15) lors de la course d'ouverture.

11. Procédé selon la revendication 9 ou 10,
**caractérisé en ce que**
dans une plage partielle supérieure de la plage de fonctionnement de commutation, dans laquelle la charge est supérieure à une charge de commutation prédéterminée et/ou dans laquelle le régime est supérieur à un régime de commutation prédéterminé, la soupape supplémentaire respective (11) ouvre le canal d'admission respectif (10), seulement quand la course de la soupape d'admission (7) associée à l'ouverture d'admission masquée respective (6) atteint la course de commutation (15) lors de la course de fermeture.
